# EUROPÄISCHE PATENTSCHRIFT

(11) **EP 4 420 853 B1**
(45) Veröffentlichungstag und Bekanntmachung des Hinweises auf die Patenterteilung: **27.08.2025**
(21) Anmeldenummer: 24156896.3
(22) Anmeldetag: 09.02.2024
(51) Int. Cl.: B29C 44/28, B29B 7/76, B01F 25/31, B29B 7/90

(54) **VERFAHREN UND VORRICHTUNG ZUR KONTINUIERLICHEN PRODUKTION VON POLYURETHAN-BLOCKSCHAUM**
PROCESS AND APPARATUS FOR CONTINUOUS PRODUCTION OF POLYURETHANE FOAM BLOCKS
PROCÉDÉ ET DISPOSITIF POUR LA PRODUCTION CONTINUE DE MOUSSE DE POLYURÉTHANE EN BLOC

(30) Priorität: 23.02.2023 DE 102023104500
(43) Veröffentlichungstag der Anmeldung: 28.08.2024
(73) Patentinhaber: Hennecke GmbH, 53757 Sankt Augustin (DE)
(72) Erfinder: Krupp, Martin, 53773 Hennef (DE); Schamberg, Martin, 53757 Sankt Augustin (DE)
(74) Vertreter: Gosdin, Carstensen & Partner Patentanwälte Partnerschaftgesellschaft mbB

(56) Entgegenhaltungen:
- EP-A2- 3 892 432
- DE-A1- 102010 025 501
- DE-A1- 2 750 938
- DE-C1- 3 841 671
- DE-C1- 4 420 168

## Beschreibung

Die Erfindung betrifft ein Verfahren zur kontinuierlichen Produktion von Polyurethan-Blockschaum, bei dem mehrere unterschiedliche chemische Komponenten, darunter zumindest eine Polyol-Komponente und eine Isocyanat-Komponente, einzeln dosiert und anschließend einer Mischkammer zugeführt werden, in der sie zu einem Polyurethan-Reaktivgemisch vermischt und anschließend auf eine kontinuierlich bewegte Trennbahn ausgetragen werden, wobei das Reaktivgemisch anschließend aufschäumt und zu einem kontinuierlichen Strang aus Polyurethanschaum ausreagiert, wobei im Bereich einer Leitung für eine der chemischen Komponenten vor dem Eintritt in die Mischkammer der chemischen Komponente ein Füllstoff zugegeben wird. Des Weiteren betrifft die Erfindung eine Vorrichtung zur kontinuierlichen Produktion von Polyurethan-Blockschaum.

Ein gattungsgemäßes Verfahren ist aus der DE 44 20 168 C1 bekannt. Ein ähnliches Verfahren offenbart die EP 3 695 945 A1**.** Bei der kontinuierlichen Produktion von Polyurethan-Blockschaum werden verschiedene flüssige chemische Komponenten dosiert in einem vorgegebenen Mischungsverhältnis einer Mischkammer (d. h. einem Mischorgan) zugeführt, in dieser miteinander vermischt und anschließend auf eine kontinuierlich bewegte Trennbahn ausgetragen. Anschließend schäumt das ausgetragene Reaktivgemisch auf und härtet aus, so dass ein Quasi-Endlos-Strang aus Polyurethanschaum entsteht, der dann in Blöcke definierter Länge geschnitten wird. Die Reaktivmischung enthält in der Regel zumindest eine Polyol-Komponente, eine Isocyanat-Komponente sowie mehrere Additive. Alle diese chemischen Komponenten werden in der Regel mittels Dosierpumpen dosiert und dem Mischer zugeführt, wobei es gegebenenfalls vorteilhaft sein kann, bestimmte Komponenten vor dem Eintritt in das eigentliche Mischorgan miteinander zu vermischen.

In der Polyurethanverarbeitung wird Blähgraphit als Flammschutzmittel eingesetzt. Die Wirkungsweise, Vorteile und Probleme bei der Verarbeitung von scherempfindlichen Füllstoffen wie Blähgraphit werden beispielsweise in der EP 3 892 432 A2 erläutert.

Ein Problem bei der Verarbeitung von Blähgraphit besteht darin, dass die Blähgraphit-Partikel zerstört werden können, wenn sie mechanischen Belastungen, wie insbesondere Scherkräften in Pumpen oder Düsen, ausgesetzt werden. Einerseits wird dadurch ihre Flammschutzwirkung beeinträchtigt; andererseits beeinträchtigt die dabei freigesetzte Säure die Chemie beim Aufschäumprozess.

Deshalb ist es problematisch, wenn Blähgraphit, wie bei anderen Füllstoffen üblich, als Füllstoff-Polyol-Mischung in einem Behälter angemischt wird, dort mittels Rührer in der Schwebe gehalten werden und zusätzlich im Kreislauf gefördert werden muss, damit sich kein Blähgraphit in den Leitungen absetzen kann.

Stattdessen sollte der Füllstoff möglichst direkt in den dosierten Polyolstrom gegeben und dann direkt dem Mischer zugeführt werden.

Ein derartiges Verfahren, in dem der Füllstoff direkt in dosierter Menge dem dosierten Polyolstrom zugegeben wird, ist aus der DE 38 41 671 C1 bekannt. Dieses Verfahren wird auch in Verbindung mit Blähgraphit angewendet.

Nachteilig an diesem Verfahren ist es jedoch, dass die Polyol-Füllstoff-Mischung nach dem Einmischen des Füllstoffs noch mittels einer Pumpe gefördert werden muss. Bei unempfindlichen Füllstoffen, wie beispielsweise Melaminpulver, ist das unproblematisch, aber bei scher-empfindlichem Füllstoff, wie Blähgraphit, ist dies problematisch. Ein Teil der Blähgraphit-Partikel wird nämlich bei diesem Prozess so stark geschert, dass die eigentlich eingekapselte Säure freigesetzt wird. Dadurch kommt es zu Störungen in der Schaumstruktur und zu einer Verschlechterung der Flammschutzeigenschaften.

Weitere Lösungen zeigen die DE 27 50 938 A1**,** die DE 44 17 596 A1**,** die DE 10 2010 025 501 A1 und die DE 10 2018 105 447 A1**.**

Im Lichte der vorstehend beschriebenen Problematik liegt der vorliegenden Erfindung die **Aufgabe** zugrunde, ein gattungsgemäßes Verfahren sowie eine entsprechende Vorrichtung bereitzustellen, mit dem bzw. mit der es möglich ist, die Füllstoff-Partikel und insbesondere die Blähgraphit-Partikel in den dosierten Polyolstrom so einzugeben, dass diese mit möglichst geringer Scherbelastung in den dosierten Polyolstrom eingemischt und zum Mischer gefördert werden können, ohne dabei durch eine weitere Pumpe gefördert werden zu müssen.

Die **Lösung** dieser Aufgabe durch die Erfindung ist verfahrensgemäß dadurch gekennzeichnet, dass die Zugabe des Füllstoffs so erfolgt, dass die chemische Komponente durch ein in der Leitung angeordnetes Düsenelement geführt wird, hierdurch die Fließgeschwindigkeit der chemischen Komponente erhöht und somit ein lokaler Unterdruck in der chemischen Komponente erzeugt wird und der Füllstoff in Fließrichtung hinter dem Düsenelement im Bereich des lokalen Unterdrucks zugeführt wird, wobei der Druck der chemischen Komponente in Fließrichtung vor dem Düsenelement auf einem definierten Wert gehalten wird (demgemäß wird der Druck des Mediums vor dem Düsenelement definiert), wobei zur Regelung des Drucks ein Überströmventil betätigt wird, welches in Fließrichtung vor dem Düsenelement angeordnet ist, wobei mittels des Überströmventils ein Teil des Massenstroms der chemischen Komponente in eine Bypass-Leitung geleitet wird und wobei die Bypass-Leitung direkt oder indirekt in die Mischkammer mündet (d. h. die Fördermenge durch die Blende ist durch das einstellbare Überströmventil variabel).

Der Füllstoff wird dabei bevorzugt in Fließrichtung unmittelbar hinter dem Düsenelement zugeführt, insbesondere in einem Abstand von weniger als 10 cm vom Düsenelement.

Die chemische Komponente wird dabei bevorzugt nach dem Durchströmen des Düsenelements auf eine Geschwindigkeit von mindestens 20 m/s beschleunigt.

Das Düsenelement ist bevorzugt als Blenden-artige Öffnung in der Leitung ausgebildet.

Die hierfür vorgesehene chemische Komponente ist bevorzugt ein Polyol.

Der Füllstoff wird bevorzugt kontinuierlich und in dosierter Menge zugeführt.

Beim Füllstoff handelt es sich bevorzugt um Blähgraphit.

In Fließrichtung hinter dem Düsenelement kann ein Druckhalteventil angeordnet sein, mit dem der Druck in der Leitung auf einen vorgegebenen Wert geregelt wird, wobei der der Regelung zugeführte Ist-Druck in Fließrichtung hinter dem Düsenelement an einer Stelle gemessen wird, an der die Fließgeschwindigkeit im Wesentlichen wieder auf den Wert vor dem Düsenelement abgefallen ist. Somit kann ein definierter Gegendruck aufgebaut werden.

Bei gegebenem Querschnitt des Düsenelements kann der Massenstrom der chemischen Komponente so vorgegeben werden, dass sich für die chemische Komponente nach dem Durchströmen des Düsenelements eine definierte Geschwindigkeit ergibt, wodurch sich ein definierter lokaler Unterdruck ergibt. Demgemäß wird in diesem Falle bei gegebenem Querschnitt des Düsenelements die Durchflussmenge definiert und hierüber die Geschwindigkeit.

An der Stelle der Leitung, an der der Füllstoff zugegeben wird, weist die chemische Komponente bevorzugt eine bezogen auf die Leitung tangentiale Geschwindigkeitskomponente von mindestens 5 m/s und eine axiale Geschwindigkeitskomponente von mindestens 5 m/s auf.

Eine weitere bevorzugte Ausführungsform der Erfindung sieht vor, dass ein Gas, insbesondere Kohlendioxid, in den Füllstoff eingeleitet wird, bevor dieser der Leitung zugeführt wird. Als Gas kommt insbesondere ein gut lösliches Gas wie das genannte Kohlendioxid infrage, mit dem der Füllstoff geflutet wird.

Die Vorrichtung zur kontinuierlichen Produktion von Polyurethan-Blockschaum umfasst mindestens eine Dosierpumpe zur Dosierung einer Polyol-Komponente, mindestens eine Dosierpumpe zur Dosierung einer Isocyanat-Komponente, eine Mischkammer zur Mischung der Polyol-Komponente und der Isocyanat-Komponente, mindestens ein Behältnis zur Bevorratung eines Füllstoffs, insbesondere von Blähgraphit, eine Leitung, die die Dosierpumpe zur Dosierung der Polyol-Komponente mit der Mischkammer verbindet, und eine Zuführleitung, die das Behältnis zur Bevorratung des Füllstoffs mit der Leitung verbindet. Erfindungsgemäß ist diese Vorrichtung gekennzeichnet durch ein Düsenelement, insbesondere ausgebildet als Blenden-artige Öffnung, welches in der Leitung angeordnet ist, wobei die Zuführleitung in Fließrichtung hinter dem Düsenelement in die Leitung mündet, insbesondere an einer Stelle der Leitung, die in einem Abstand von weniger als 10 cm liegt, wobei in Fließrichtung vor dem Düsenelement ein Überströmventil angeordnet ist, welches ausgebildet ist, einen Teil des passierenden Massenstroms in eine Bypass-Leitung zu leiten, wobei die Bypass-Leitung direkt oder indirekt in die Mischkammer mündet.

Dabei kann ein statisches Mischelement in Fließrichtung hinter dem Düsenelement und vor der Mischkammer angeordnet sein.

In Fließrichtung hinter dem Düsenelement kann ein Druckhalteventil angeordnet sein, mit dem der Druck in der Leitung auf einen vorgegebenen Wert geregelt werden kann.

In Fließrichtung hinter der Einmündung der Zuführleitung kann ein Massenstrom-Messgerät angeordnet sein.

Gemäß dem vorgeschlagenen Verfahren wird demgemäß vor dem Austrag insbesondere dem Polyol zusätzlich Füllstoff kontinuierlich in dosierter Menge zugegeben, wobei der Füllstoff mittels Unterdruck in das Leitungssystem eingesaugt wird; der Unterdruck wird dadurch erzeugt, dass zumindest eine der Komponenten (insbesondere das Polyol) in dem Leitungssystem zwischen dem Dosieraggregat dieser Komponente und der Mischkammer auf Geschwindigkeiten bevorzugt von mindestens 20 m/s beschleunigt wird, indem diese Komponente eine vorzugsweise Blenden-artige Öffnung durchströmt, wodurch im Bereich unmittelbar hinter dieser Blenden-artigen Öffnung lokal ein ausreichender Unterdruck entsteht, um den Füllstoff in der gewünschten Menge anzusaugen. Die Mischung aus Polyol und Füllstoff wird anschließend (und ohne Zwischenschaltung einer weiteren Pumpe) über das Leitungssystem der Mischkammer zugeführt.

Die Vorrichtung ist hierzu mit der genannten Füllstoff-Saug-Anordnung versehen, mit dem der Füllstoff in die (Polyol)Leitung eingesaugt werden kann.

Somit wird vorgeschlagen, den Füllstoff durch Ausnutzung des Venturi-Effekts im Düsenelement (d. h. Absenkung des statischen Drucks im Bereich hoher Strömungsgeschwindigkeit) in den dosierten Polyolstrom einzusaugen, indem das Polyol durch das Düsenelement insbesondere in Form einer Blende oder einen Spalt mit kleinem Querschnitt gefördert wird, so dass der Polyolstrom die Blende mit hoher Geschwindigkeit durchströmt. Dadurch entsteht im Bereich unmittelbar hinter der Blende ein Unterdruck, durch den der Füllstoff angesaugt wird. Das Gemisch aus Polyol und Füllstoff wird anschließend ohne weitere Pumpe zur Mischkammer transportiert.

Um den Füllstoff reproduzierbar in dosierter Menge anzusaugen, ist es vorteilhaft, sowohl den Gegendruck als auch die Geschwindigkeit, mit der das Polyol durch das Düsenelement (d. h. durch die Blende) strömt, zu kontrollieren. Außerdem ist es vorteilhaft, wenn der Füllstoff im Bereich der Ansaugstelle immer mit annähernd der gleichen Packungsdichte zugeführt wird. Unter diesen Bedingungen lässt sich eine Kennlinie ermitteln, bei der ein direkter Zusammenhang zwischen der Strömungsgeschwindigkeit im Düsenelement und insbesondere in der Blende und der Menge an eingesaugtem Füllstoff besteht.

Hierbei ist zu berücksichtigen, dass sowohl der benötigte Polyol-Mengenstrom als auch der Füllstoffanteil für unterschiedliche Rezepturen variieren können.

Der Unterdruck, der im Bereich der hohen Geschwindigkeit am Ausgang des Düsenelements entsteht, ist abhängig vom eingestellten Gegendruck hinter der Blende (abseits des Bereichs der hohen Strömungsgeschwindigkeit) und der Geschwindigkeit des Polyols beim Durchströmen des Düsenelements, d. h. der Blenden-artigen Öffnung.

Grundsätzlich gibt es, wie oben schon erwähnt, verschiedene Möglichkeiten, den Unterdruck hinter der Blende und damit den Volumenstrom des angesaugten Füllstoffs zu variieren:
Nach einer ersten Möglichkeit wird der Gegendruck variiert. Bei Absenkung des Gegendrucks wird mehr Füllstoff angesaugt, bei Anhebung des Gegendrucks wird weniger Füllstoff angesaugt.

Gemäß einer zweiten Möglichkeit wird die Geschwindigkeit des Polyols beim Durchströmen des Düsenelements variiert, indem der Querschnitt des Düsenspalts variiert wird, beispielsweise durch Verwendung einer verstellbaren Zapfendüse. Bei höherer Geschwindigkeit entsteht ein höherer Unterdruck und es wir mehr Füllstoff angesaugt, bei niedrigerer Geschwindigkeit entsteht ein geringerer Unterdruck und es wird weniger Füllstoff angesaugt.

Nach einer dritten Möglichkeit wird die Geschwindigkeit des Polyols beim Durchströmen des Düsenelements variiert, indem der Volumenstrom des Polyols, der durch die Düse strömt, variiert wird. Bei einer Blenden-artigen Düse kann die Druckdifferenz (Druck vor der Düse minus Druck hinter der Düse) als Maß für die Geschwindigkeit verwendet werden. Bei einem höheren Volumenstrom des Polyols durchströmt das Polyol die Blende mit einer höheren Geschwindigkeit und es entsteht ein stärkerer Unterdruck, wodurch mehr Füllstoff angesaugt wird. Bei einem geringeren Volumenstrom des Polyols durchströmt das Polyol die Blende mit einer niedrigeren Geschwindigkeit und es entsteht ein geringerer Unterdruck, wodurch weniger Füllstoff angesaugt wird.

Bevorzugt erfolgt die Zugabe des Füllstoffs so nah wie möglich an der Mischkammer. Dadurch kann der Gegendruck im Bereich der Impfstelle niedrig gehalten werden. Außerdem wird dadurch der Bereich minimiert, der nach der Produktion gespült werden muss, da der Füllstoff ansonsten die Tendenz hat, sich relativ schnell nach unten abzusetzen, wodurch dann ein Sumpf in dem mit dem Füllstoff "kontaminierten" Leitungssystem entstehen kann.

Eine Variante des vorgeschlagenen Verfahrens besteht darin, hinter der Einsaugstelle eine Pumpe zu verwenden, welche minimale Scherspannungen verursacht. Bevorzugt wird hierfür eine Schlauchpumpe verwendet, bei der der Schlauch nicht vollständig zusammengedrückt wird. Die Drehzahl der Pumpe wird dann so eingestellt, dass sich vor der Pumpe ein definierter Sollwert für den Druck einstellt.

Mit dem Füllstoff wird unvermeidbar auch Gas mit eingesaugt. Im Normalfall handelt es sich dabei um Luft. Häufig ist es vorteilhaft, wenn die Luft durch ein Gas ersetzt wird, welches eine höhere Löslichkeit in Polyol besitzt. Kohlendioxidgas besitzt zum Beispiel eine wesentlich höhere Löslichkeit sowohl in Polyol als auch in Isocyanat als Luft. Dadurch sinkt der Gasanteil in der Mischkammer, da das Kohlendioxid in der Mischkammer in Lösung geht. Dadurch kann in vielen Fällen eine bessere Schaumstruktur erzielt werden.

Um die Luft durch Kohlendioxid zu ersetzen, wird die Füllstoff-Schüttung beispielsweise mit Lanzen im Vorratsbehälter für den Füllstoff mit Kohlendioxid geflutet.

In den Zeichnungen sind Ausführungsbeispiele der Erfindung dargestellt.
- Fig. 1: zeigt schematisch eine Vorrichtung zur kontinuierlichen Produktion von Polyurethan-Blockschaum gemäß einer ersten Ausführungsform der Erfindung,
- Fig. 2: zeigt schematisch den Aufbau einer Einimpf-Stelle für Füllstoff in Form von Blähgraphit,
- Fig. 3: zeigt schematisch eine Vorrichtung nach Figur 1 gemäß einer anderen Ausführungsform der Erfindung,
- Fig. 4: zeigt schematisch eine Vorrichtung nach Figur 1 gemäß einer nicht erfindungsgemäßen Ausführungsform,
- Fig. 5: zeigt schematisch eine Vorrichtung nach Figur 1 gemäß einer weiteren nicht erfindungsgemäßen Ausführungsform und
- Fig. 6: zeigt schematisch den Aufbau der Einimpf-Stelle für Füllstoff in Form von Blähgraphit gemäß einer zu Figur 2 alternativen Ausführungsform.

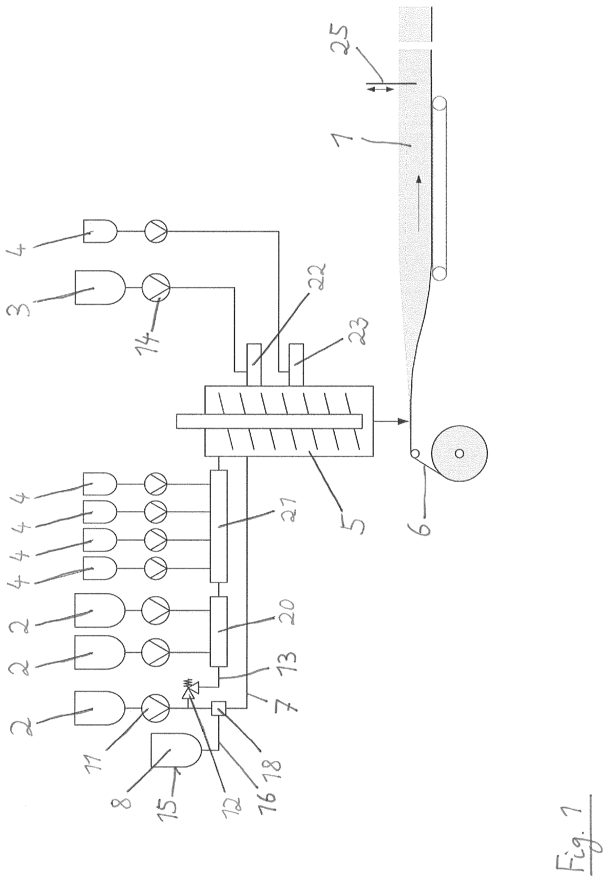

In Figur 1 ist eine Vorrichtung zur kontinuierlichen Produktion von Polyurethan-Blockschaum 1 dargestellt. Zu erkennen sind drei Behälter für Polyol 2, fünf Behälter für Additive 4 und ein Behälter für Isocyanat 3. Jeder Behälter ist über eine Leitung mit jeweils einer Dosierpumpe verbunden (Dosierpumpe 11 für Polyol, Dosierpuppe 14 für Isocyanat). Mit Ausnahme eines Teilstroms des ersten Polyols 2 werden die verschiedenen Polyole in einer Polyol-Sammelleiste 20 vereinigt; in der Additiv-Sammelleiste 21 werden dann die Additive in den Polyolstrom injiziert, bevor die Mischung dann in die Mischkammer 5 strömt.

Das Isocyanat 3 wird über eine oder mehrere Düsen 22 direkt in die Mischkammer 5 eingedüst. Ebenso können bestimmte Additive über Düsen 23 direkt in die Mischkammer 5 gegeben werden.

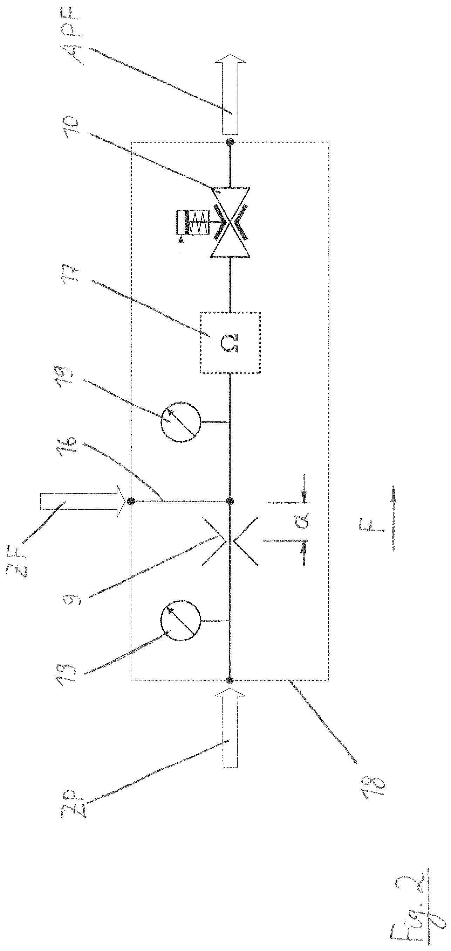

Ein Teilstrom des ersten Polyols 2 strömt an der Sammelleiste 20 vorbei zunächst zu einer Einimpf-Stelle 18, wo ein Füllstoff 8 in Form von Blähgraphit eingesaugt wird, der aus einem Behältnis 15 zugeführt wird. Die Einimpf-Stelle 18 entspricht dabei dem schematischen Aufbau, wie er in Figur 2 dargestellt ist. Anschließend strömt die Polyol-Füllstoff-Mischung direkt in die Mischkammer 5. Der andere Teilstrom des ersten Polyols strömt in bei dieser Ausführungsform über ein einstellbares Überströmventil 12 in die Polyol-Sammelleiste 20. Mit Hilfe des Überströmventils 12 lässt sich einstellen, mit welchem Druck der erste Polyol-Teilstrom in die Einimpf-Stelle 18 und insbesondere in ein Düsenelement 9 in Form einer Blende einströmt, die als Teil der Einimpf-Stelle 18 in Figur 2 dargestellt ist. Je höher der Druck eingestellt wird, desto höher ist die Geschwindigkeit, mit der das Düsenelement 9 durchströmt wird.

In der Mischkammer 5 werden alle Komponenten miteinander vermischt und als Reaktivmischung anschließend auf eine kontinuierlich bewegte Trennbahn 6 ausgetragen, auf der die Reaktivmischung dann aufschäumt, aushärtet und in Blöcke definierter Länge geschnitten wird, wozu die Schneidvorrichtung 25 dient.

Figur 2 zeigt den schematischen Aufbau der Einimpf-Stelle 18, an der der Füllstoff-Strom (Zulauf Füllstoff ZF) in den Polyolstrom (Zulauf Polyol ZP) eingesaugt wird. Die Einimpf-Stelle 18 ist im Bereich einer Leitung 7 angeordnet, mit der das Polyol gefördert wird. Der Polyolstrom durchströmt das Düsenelement 9 in Form einer Blende, wobei die Geschwindigkeit bevorzugt auf mindestens 20 m/s erhöht wird. Dadurch wird der statische Druck im Medium abgesenkt; am Ausgang der Blende 9 entsteht ein Unterdruck. Als Blende 9 wird in diesem Ausführungsbeispiel bevorzugt eine einfache Lochblende eingesetzt, aber es können auch einstellbare Blenden, wie beispielsweise eine verstellbare Zapfendüse, eingesetzt werden.

Unmittelbar hinter der Blende 9, nämlich in einem Abstand a, der maximal 10 cm beträgt, wird der Füllstoff-Strom in den Polyolstrom gesaugt, so dass das mit Füllstoff 8 versehene Polyol 2 in Förderrichtung F die Einimpf-Stelle 18 verlässt (Ablauf Polyol-Füllstoff-Mischung APF). Der Füllstoff 8 wird der Förderleitung für das Polyol mittels einer Zuführleitung 16 zugeführt, die eine Verbindung zwischen dem Behältnis für den Füllstoff 8 mit der Leitung 7 herstellt.

Der Gegendruck hinter der Blende 9 kann mittels einer verstellbaren Drossel eingestellt werden, die hier als Druckhalteventil 10 ausgebildet ist. Dabei wird bevorzugt ein Schlauchquetschventil eingesetzt, da dieses einerseits wenig Scherung erzeugt und es andererseits nahezu Totraum-frei ist.

Optional kann zwischen der Blende 9 und der Drossel 10 noch ein Massenstrom-Messgerät (Massenstromzähler) 17 eingesetzt werden. Alternativ kann dieses auch hinter dem einstellbaren Druckhalteventil 10 eingebaut werden.

Zur Messung der Drücke werden vor und hinter der Blende 9 Drucksensoren 19 installiert. Abschließend strömt der Polyol-Füllstoff-Strom (APF) in Fließrichtung F von der Einimpf-Stelle 19 weiter in Richtung Mischkammer 5.

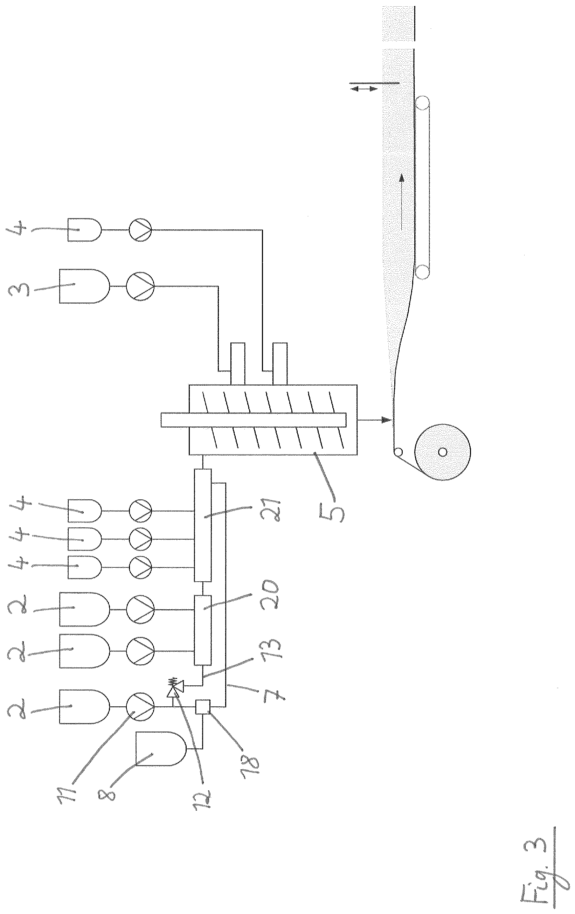

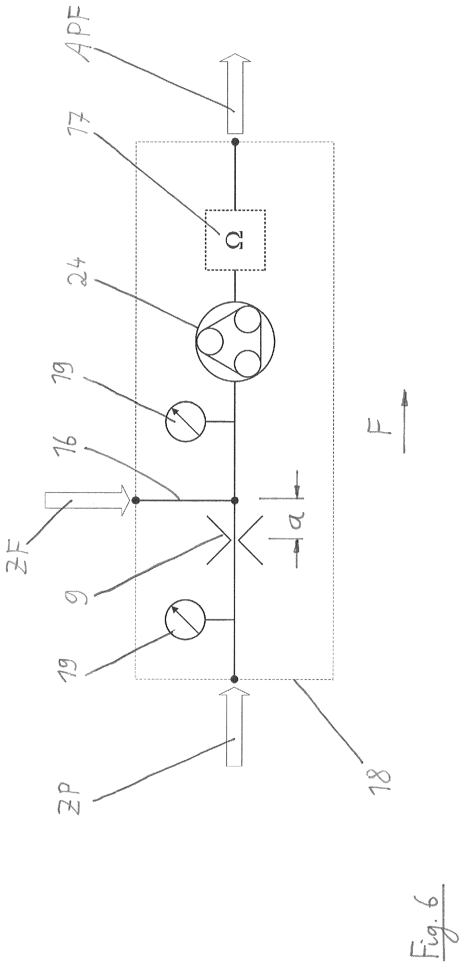

Die Figuren 3, 4 und 5 zeigen alternative Ausführungsformen zu derjenigen, die in Figur 1 dargestellt ist. Figur 6 zeigt eine alternative Ausgestaltung der Einimpf-Stelle 18, wie sie in Figur 2 wiedergegeben ist.

Figur 3 zeigt eine Lösung, bei der die Polyol-Füllstoff-Mischung nicht direkt der Mischkammer 5 zugeführt wird, sondern kurz vor dieser der Mischung aus Polyolen und Additiven zugegeben wird. Die Einleitung des mit Füllstoff 8 beladenen Polyols 2 erfolgt also in die Sammelleiste 21.

Sowohl bei der in Figur 3 dargestellten Lösung als auch bei derjenigen gemäß Figur 1 ist vorgesehen, dass der der Einimpf-Stelle 18 zugeleitete PolyolStrom vor der Einimpf-Stelle 18 in eine Bypass-Leitung 13 abgeleitet werden kann (nämlich in die Polyol-Sammelleiste 20). Hierzu ist das oben genannte Überströmventil 12 vorgesehen, um den Massenstrom zu steuern bzw. zu regeln, der entweder der Einimpf-Stelle 18 oder der Bypass-Leitung 13 zugeführt wird.

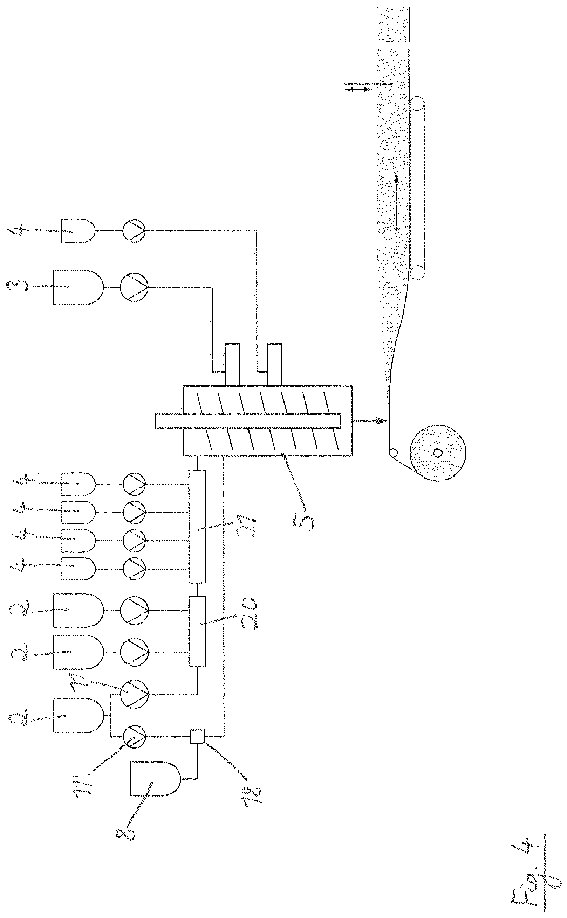

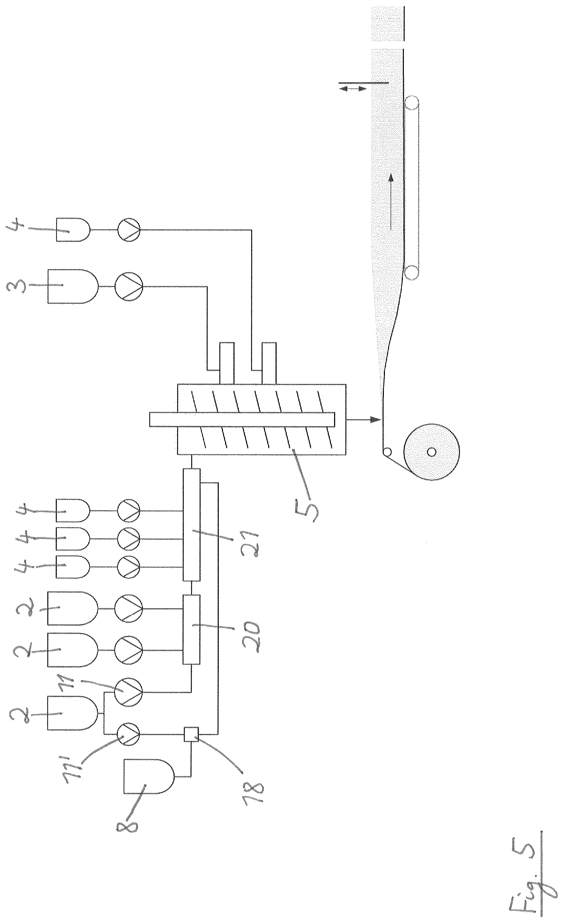

Die Figuren 4 und 5 zeigen weitere alternative Ausgestaltungen der Vorrichtung bzw. des Verfahrens. Hierbei wird das erste Polyol jeweils über zwei einzelne Dosierpumpen 11 und 11' dosiert. Der eine Polylstrom wird dabei der Einimpf-Stelle 18 zugeführt, während der andere Polyolstrom der Polyol-Sammelleiste 20 zugeführt wird.

In Figur 4 wird die Polyol-Füllstoff-Mischung dabei von der Einimpf-Stelle 18 direkt der Mischkammer 5 zugeführt, während die Polyol-Füllstoff-Mischung bei der Lösung gemäß Figur 5 unmittelbar vor der Mischkammer 5 zunächst der Polyol-Additiv-Mischung, d. h. der Sammelleiste 21, zugeführt wird.

Figur 6 zeigt eine alternative Ausgestaltung der Einimpf-Stelle 18. Hierbei ist hinter der Blende 9 eine Schlauchpumpe 24 verbaut. Bevorzugt wird hierfür eine Schlauchpumpe verwendet, bei der der Schlauch nicht vollständig zusammengedrückt wird, damit keine hohen Scherkräfte auf die Blähgraphit-Partikel wirken. Die Schlauchpumpe 24 fungiert dabei nicht als Dosierpumpe, sondern als Druckerhöhungspumpe. Die Drehzahl der Schlauchpumpe 24 wird dann so eingestellt, dass sich ein definierter Druck zwischen der Blende 9 und der Schlauchpumpe 24 einstellt, erfasst durch den Drucksensor 19.

### Bezugszeichenliste:

- 1: Polyurethan-Blockschaum
- 2: chemische Komponente (Polyol)
- 3: chemische Komponente (Isocyanat)
- 4: chemische Komponente (Additiv)
- 5: Mischkammer
- 6: Trennbahn
- 7: Leitung für eine der chemischen Komponenten (Polyol)
- 8: Füllstoff (Blähgraphit)
- 9: Düsenelement (Blenden-artige Öffnung in der Leitung 7; fest oder einstellbar)
- 10: Druckhalteventil (Schlauchquetschventil)
- 11: Dosierpumpe (für Polyol)
- 11': zusätzliche Dosierpumpe (für Polyol)
- 12: Überströmventil
- 13: Bypass-Leitung
- 14: Dosierpumpe (für Isocyanat)
- 15: Behältnis zur Bevorratung des Füllstoffs
- 16: Zuführleitung (Verbindung zwischen Behältnis für Füllstoffs mit der Leitung 7)
- 17: Massenstrom-Messgerät
- 18: Einimpf-Stelle für Füllstoff
- 19: Drucksensor
- 20: Sammelleiste Polyol
- 21: Sammelleiste Additiv
- 22: Düse Isocyanat
- 23: Düse Additiv
- 24: Schlauchpumpe
- 25: Schneidvorrichtung

- F: Fließrichtung
- a: Abstand
- ZP: Zulauf Polyol
- ZF: Zulauf Füllstoff
- APF: Ablauf Polyol-Füllstoff- Mischung

## Patentansprüche

1. Verfahren zur kontinuierlichen Produktion von Polyurethan-Blockschaum (1), bei dem mehrere unterschiedliche chemische Komponenten (2, 3, 4), darunter zumindest eine Polyol-Komponente und eine Isocyanat-Komponente, einzeln dosiert und anschließend einer Mischkammer (5) zugeführt werden, in der sie zu einem Polyurethan-Reaktivgemisch vermischt und anschließend auf eine kontinuierlich bewegte Trennbahn (6) ausgetragen werden, wobei das Reaktivgemisch anschließend aufschäumt und zu einem kontinuierlichen Strang aus Polyurethanschaum ausreagiert, wobei im Bereich einer Leitung (7) für eine der chemischen Komponenten (2) vor dem Eintritt in die Mischkammer (5) der chemischen Komponente (2) ein Füllstoff (8), insbesondere Blähgraphit, zugegeben wird,
**dadurch gekennzeichnet,**
**dass** die Zugabe des Füllstoffs (8) so erfolgt, dass die chemische Komponente (2) durch ein in der Leitung (7) angeordnetes Düsenelement (9) geführt wird, hierdurch die Fließgeschwindigkeit der chemischen Komponente (2) erhöht und somit ein lokaler Unterdruck in der chemischen Komponente (2) erzeugt wird und der Füllstoff (8) in Fließrichtung (F) hinter dem Düsenelement (9) im Bereich des lokalen Unterdrucks zugeführt wird,
wobei der Druck der chemischen Komponente (2) in Fließrichtung (F) vor dem Düsenelement (9) auf einem definierten Wert gehalten wird, wobei zur Regelung des Drucks ein Überströmventil (12) betätigt wird, welches in Fließrichtung (F) vor dem Düsenelement (9) angeordnet ist, wobei mittels des Überströmventils (12) ein Teil des Massenstroms der chemischen Komponente (2) in eine Bypass-Leitung (13) geleitet wird und wobei die Bypass-Leitung (13) direkt oder indirekt in die Mischkammer (5) mündet.

2. Verfahren nach Anspruch 1, **dadurch gekennzeichnet, dass** der Füllstoff (8) in Fließrichtung (F) unmittelbar hinter dem Düsenelement (9) zugeführt wird, wobei der Füllstoff (8) in Fließrichtung (F) bevorzugt in einem Abstand (a) von weniger als 10 cm vom Düsenelement (9) zugeführt wird.

3. Verfahren nach Anspruch 1 oder 2, **dadurch gekennzeichnet, dass** die chemische Komponente (2) nach dem Durchströmen des Düsenelements (9) auf eine Geschwindigkeit von mindestens 20 m/s beschleunigt wird.

4. Verfahren nach einem der Ansprüche 1 bis 3, **dadurch gekennzeichnet, dass** das Düsenelement (9) als Blenden-artige Öffnung in der Leitung (7) ausgebildet ist.

5. Verfahren nach einem der Ansprüche 1 bis 4, **dadurch gekennzeichnet, dass** der Füllstoff (8) kontinuierlich und in dosierter Menge zugeführt wird.

6. Verfahren nach einem der Ansprüche 1 bis 5, **dadurch gekennzeichnet, dass** in Fließrichtung (F) hinter dem Düsenelement (9) ein Druckhalteventil (10) angeordnet ist, mit dem der Druck in der Leitung (7) auf einen vorgegebenen Wert geregelt wird, wobei der der Regelung zugeführte Ist-Druck in Fließrichtung (F) hinter dem Düsenelement (9) an einer Stelle gemessen wird, an der die Fließgeschwindigkeit im Wesentlichen wieder auf den Wert vor dem Düsenelement (9) abgefallen ist.

7. Verfahren nach einem der Ansprüche 1 bis 6, **dadurch gekennzeichnet, dass** bei gegebenem Querschnitt des Düsenelements (9) der Massenstrom der chemischen Komponente (2) so vorgegeben wird, dass sich für die chemische Komponente (2) nach dem Durchströmen des Düsenelements (9) eine definierte Geschwindigkeit ergibt, wodurch sich ein definierter lokaler Unterdruck ergibt.

8. Verfahren nach einem der Ansprüche 1 bis 7, **dadurch gekennzeichnet, dass** an der Stelle der Leitung (7), an der der Füllstoff (8) zugegeben wird, die chemische Komponente (2) eine bezogen auf die Leitung (7) tangentiale Geschwindigkeitskomponente von mindestens 5 m/s und eine axiale Geschwindigkeitskomponente von mindestens 5 m/s aufweist.

9. Verfahren nach einem der Ansprüche 1 bis 8, **dadurch gekennzeichnet, dass** ein Gas in den Füllstoff (8) eingeleitet wird, bevor dieser der Leitung (7) zugeführt wird.

10. Vorrichtung zur kontinuierlichen Produktion von Polyurethan-Blockschaum (1), insbesondere zur Durchführung des Verfahrens nach einem der Ansprüche 1 bis 9, umfassend
- mindestens eine Dosierpumpe (11, 11') zur Dosierung einer Polyol-Komponente (2),
- mindestens eine Dosierpumpe (14) zur Dosierung einer Isocyanat-Komponente (3),
- eine Mischkammer (5) zur Mischung der Polyol-Komponente (2) und der Isocyanat-Komponente (3),
- mindestens ein Behältnis (15) zur Bevorratung eines Füllstoffs (8),
- eine Leitung (7), die die Dosierpumpe (11,11') zur Dosierung der Polyol-Komponente (2) mit der Mischkammer (5) verbindet,
- eine Zuführleitung (16), die das Behältnis (15) zur Bevorratung des Füllstoffs (8) mit der Leitung (7) verbindet,
**gekennzeichnet durch**
ein Düsenelement (9), welches in der Leitung (7) angeordnet ist, wobei die Zuführleitung (16) in Fließrichtung (F) hinter dem Düsenelement (9) in die Leitung (7) mündet,
wobei in Fließrichtung (F) vor dem Düsenelement (9) ein Überströmventil (12) angeordnet ist, welches ausgebildet ist, einen Teil des passierenden Massenstroms in eine Bypass-Leitung (13) zu leiten, wobei die Bypass-Leitung (13) direkt oder indirekt in die Mischkammer (5) mündet.

11. Vorrichtung nach Anspruch 10, **dadurch gekennzeichnet, dass** das Düsenelement (9) als Blenden-artige Öffnung ausgebildet ist.

12. Vorrichtung nach Anspruch 10 oder 11, **dadurch gekennzeichnet, dass** die Zuführleitung (16) in Fließrichtung (F) hinter dem Düsenelement (9) an einer Stelle, die in einem Abstand (a) von weniger als 10 cm liegt, in die Leitung (7) mündet.

13. Vorrichtung nach einem der Ansprüche 10 bis 12, **dadurch gekennzeichnet, dass** ein statisches Mischelement in Fließrichtung (F) hinter dem Düsenelement (9) und vor der Mischkammer (5) angeordnet ist.

14. Vorrichtung nach einem der Ansprüche 10 bis 13, **dadurch gekennzeichnet, dass** in Fließrichtung (F) hinter dem Düsenelement (9) ein Druckhalteventil (10) angeordnet ist, mit dem der Druck in der Leitung (7) auf einen vorgegebenen Wert geregelt werden kann.

15. Vorrichtung nach einem der Ansprüche 10 bis 14, **dadurch gekennzeichnet, dass** in Fließrichtung (F) hinter der Einmündung der Zuführleitung (16) ein Massenstrom-Messgerät (17) angeordnet ist.

## Claims

1. Method for the continuous production of polyurethane block foam (1), in which several different chemical components (2, 3, 4), including at least one polyol component and one isocyanate component, are individually metered and then fed into a mixing chamber (5) in which they are mixed to form a polyurethane reactive mixture and then discharged onto a continuously moving separating sheet (6), wherein the reactive mixture subsequently foams and reacts to form a continuous strand of polyurethane foam, wherein a filler (8), in particular expanded graphite, is added in the region of a conduit (7) for one of the chemical components (2) before the chemical component (2) enters the mixing chamber (5),
**characterized in**
**that** the filler (8) is added in such a way that the chemical component (2) is guided through a nozzle element (9) arranged in the conduit (7), thereby increasing the flow velocity of the chemical component (2) and thus generating a local negative pressure in the chemical component (2), and the filler (8) is supplied in the direction of flow (F) behind the nozzle element (9) in the area of the local negative pressure,
wherein the pressure of the chemical component (2) in the flow direction (F) upstream of the nozzle element (9) is maintained at a defined value, wherein, to regulate the pressure, a bypass valve (12) is actuated, which is arranged in the flow direction (F) upstream of the nozzle element (9), wherein, by means of the bypass valve (12) a portion of the mass flow of the chemical component (2) is directed into a bypass line (13) and wherein the bypass line (13) opens out directly or indirectly into the mixing chamber (5).

2. Method according to claim 1, **characterised in that** the filler (8) is fed in the direction of flow (F) immediately behind the nozzle element (9), wherein the filler (8) is preferably fed in the direction of flow (F) at a distance (a) of less than 10 cm from the nozzle element (9).

3. Method according to claim 1 or 2, **characterised in that** the chemical component (2) is accelerated to a speed of at least 20 m/s after passing through the nozzle element (9).

4. Method according to one of claims 1 to 3, **characterised in that** the nozzle element (9) is designed as a blind-like opening in the conduit (7).

5. Method according to one of claims 1 to 4, **characterised in that** the filler (8) is fed continuously and in a metered quantity.

6. Method according to one of claims 1 to 5, **characterised in that** a pressure-maintaining valve (10) is arranged downstream of the nozzle element (9) in the flow direction (F), by means of which the pressure in the conduit (7) is regulated to a predetermined value, wherein the actual pressure fed to the regulation is measured in the flow direction (F) behind the nozzle element (9) at a point where the flow velocity has essentially dropped back to the value before the nozzle element (9).

7. Method according to one of claims 1 to 6, **characterised in that**, given a specific cross-section of the nozzle element (9), the mass flow of the chemical component (2) is specified such that the chemical component (2) has a defined velocity after passing through the nozzle element (9), thereby creating a defined local negative pressure.

8. Method according to one of claims 1 to 7, **characterised in that** at the point of the conduit (7) where the filler (8) is added, the chemical component (2) has a tangential velocity component of at least 5 m/s relative to the conduit (7) and an axial velocity component of at least 5 m/s.

9. Method according to one of claims 1 to 8, **characterised in that** a gas is introduced into the filler (8) before it is fed to the conduit (7).

10. Device for the continuous production of polyurethane block foam (1), in particular for carrying out the method according to one of claims 1 to 9, comprising
- at least one metering pump (11, 11') for metering a polyol component (2),
- at least one metering pump (14) for metering an isocyanate component (3),
- a mixing chamber (5) for mixing the polyol component (2) and the isocyanate component (3),
- at least one container (15) for storing a filler (8),
- a conduit (7) connecting the metering pump (11, 11') for metering the polyol component (2) to the mixing chamber (5),
- a feed line (16) connecting the container (15) for storing the filler (8) to the conduit (7),
**characterised by**
a nozzle element (9) which is arranged in the conduit (7), wherein the feed line (16) opens out into the conduit (7) in the direction of flow (F) downstream of the nozzle element (9),
wherein an overflow valve (12) is arranged in the direction of flow (F) upstream of the nozzle element (9), which is designed to divert part of the passing mass flow into a bypass line (13), wherein the bypass line (13) opens out directly or indirectly into the mixing chamber (5).

11. Device according to claim 10, **characterised in that** the nozzle element (9) is designed as a blind-like opening.

12. Device according to claim 10 or 11, **characterised in that** the feed line (16) opens out into the conduit (7) in the direction of flow (F) downstream the nozzle element (9) at a point that has a distance (a) of less than 10 cm.

13. Device according to one of claims 10 to 12, **characterised in that** a static mixing element is arranged in the flow direction (F) downstream the nozzle element (9) and upstream of the mixing chamber (5).

14. Device according to one of claims 10 to 13, **characterised in that** a pressure-maintaining valve (10) is arranged in the flow direction (F) downstream of the nozzle element (9), by means of which the pressure in the conduit (7) can be regulated to a predetermined value.

15. Device according to one of claims 10 to 14, **characterised in that** a mass flow meter (17) is arranged in the flow direction (F) downstream of the junction of the feed line (16).

## Revendications

1. Procédé de production en continu de mousse de polyuréthane en bloc (1), dans lequel plusieurs composants chimiques différents (2, 3, 4), dont au moins un composant polyol et un composant isocyanate, sont dosés individuellement et sont ensuite amenés à une chambre de mélange (5), dans laquelle ils sont mélangés en un mélange réactif de polyuréthane et sont ensuite déchargés sur une bande de séparation (6) déplacée en continu, le mélange réactif moussant ensuite et réagissant en un cordon continu de mousse de polyuréthane, une charge (8), notamment du graphite expansé, étant ajoutée au composant chimique (2) dans la zone d'une conduite (7) pour l'un des composants chimiques (2) avant l'entrée dans la chambre de mélange (5),
**caractérisé en ce que**
l'ajout de la charge (8) s'effectue de telle sorte que le composant chimique (2) est guidé à travers un élément de buse (9) agencé dans la conduite (7), la vitesse d'écoulement du composant chimique (2) étant ainsi augmentée et une dépression locale est ainsi créée dans le composant chimique (2) et la charge (8) étant amenée dans la direction d'écoulement (F) après l'élément de buse (9) dans la zone de la dépression locale,
la pression du composant chimique (2) étant maintenue à une valeur définie dans la direction d'écoulement (F) en avant l'élément de buse (9), une soupape de débordement (12) étant actionnée pour réguler la pression, qui est agencée avant l'élément de buse (9) dans la direction d'écoulement (F), une partie du flux massique du composant chimique (2) étant dirigée dans une conduite de dérivation (13) au moyen de la soupape de débordement (12) et la conduite de dérivation (13) débouchant directement ou indirectement dans la chambre de mélange (5).

2. Procédé selon la revendication 1, **caractérisé en ce que** la charge (8) est amenée dans la direction d'écoulement (F) directement après l'élément de buse (9), la charge (8) étant amenée dans la direction d'écoulement (F) de préférence à une distance (a) de moins de 10 cm de l'élément de buse (9).

3. Procédé selon la revendication 1 ou 2, **caractérisé en ce que** le composant chimique (2) est accéléré à une vitesse d'au moins 20 m/s après la traversée de l'élément de buse (9).

4. Procédé selon l'une quelconque des revendications 1 à 3, **caractérisé en ce que** l'élément de buse (9) est réalisé sous forme d'ouverture de type diaphragme dans la conduite (7).

5. Procédé selon l'une quelconque des revendications 1 à 4, **caractérisé en ce que** la charge (8) est amenée en continu et en quantité dosée.

6. Procédé selon l'une quelconque des revendications 1 à 5, **caractérisé en ce qu'**une soupape de maintien de pression (10) est agencée après l'élément de buse (9) dans la direction de l'écoulement (F), au moyen de laquelle la pression dans la conduite (7) est régulée à une valeur prédéfinie, la pression réelle amenée à la régulation étant mesurée après l'élément de buse (9) dans la direction de l'écoulement (F) à un emplacement où la vitesse d'écoulement est retombée essentiellement à la valeur avant l'élément de buse (9).

7. Procédé selon l'une quelconque des revendications 1 à 6, **caractérisé en ce que**, pour une section transversale donnée de l'élément de buse (9), le débit massique du composant chimique (2) est prédéfini de telle sorte qu'il en résulte une vitesse définie pour le composant chimique (2) après la traversée de l'élément de buse (9), ce qui permet d'obtenir une dépression locale définie.

8. Procédé selon l'une quelconque des revendications 1 à 7, **caractérisé en ce qu'**à l'emplacement de la conduite (7) où la charge (8) est ajoutée, le composant chimique (2) présente une composante de vitesse tangentielle d'au moins 5 m/s et une composante de vitesse axiale d'au moins 5 m/s par rapport à la conduite (7).

9. Procédé selon l'une quelconque des revendications 1 à 8, **caractérisé en ce qu'**un gaz est introduit dans la charge (8) avant que celle-ci ne soit amenée dans la conduite (7).

10. Dispositif pour la production en continu de mousse de polyuréthane en bloc (1), notamment pour la mise en œuvre du procédé selon l'une quelconque des revendications 1 à 9, comprenant
- au moins une pompe de dosage (11, 11') pour le dosage d'un composant polyol (2),
- au moins une pompe de dosage (14) pour le dosage d'un composant isocyanate (3),
- une chambre de mélange (5) pour mélanger le composant polyol (2) et le composant isocyanate (3),
- au moins un récipient (15) pour stocker une charge (8),
- une conduite (7) qui relie la pompe de dosage (11, 11') pour le dosage du composant polyol (2) à la chambre de mélange (5),
- une conduite d'amenée (16) qui relie le récipient (15) destiné à stocker la charge (8) à la conduite (7),
**caractérisé par**
un élément de buse (9) qui est agencé dans la conduite (7), la conduite d'amenée (16) débouchant dans la conduite (7) après l'élément de buse (9) dans la direction d'écoulement (F),
une soupape de débordement (12) étant agencée avant l'élément de buse (9) dans la direction d'écoulement (F), laquelle est réalisée pour diriger une partie du flux massique passant dans une conduite de dérivation (13), la conduite de dérivation (13) débouchant directement ou indirectement dans la chambre de mélange (5).

11. Dispositif selon la revendication 10, **caractérisé en ce que** l'élément de buse (9) est réalisé sous forme d'ouverture de type diaphragme.

12. Dispositif selon la revendication 10 ou 11, **caractérisé en ce que** la conduite d'amenée (16) débouche dans la conduite (7) après l'élément de buse (9) dans la direction d'écoulement (F), à un emplacement situé à une distance (a) inférieure à 10 cm.

13. Dispositif selon l'une quelconque des revendications 10 à 12, **caractérisé en ce qu'**un élément de mélange statique est agencé après l'élément de buse (9) et avant la chambre de mélange (5) dans la direction d'écoulement (F).

14. Dispositif selon l'une quelconque des revendications 10 à 13, **caractérisé en ce qu'**une soupape de maintien de pression (10) est agencée après l'élément de buse (9) dans la direction d'écoulement (F), avec laquelle la pression dans la conduite (7) peut être régulée à une valeur prédéfinie.

15. Dispositif selon l'une quelconque des revendications 10 à 14, **caractérisé en ce qu'**un débitmètre massique (17) est agencé après l'embouchure de la conduite d'amenée (16) dans la direction d'écoulement (F).
